# EUROPÄISCHE PATENTSCHRIFT

(11) **EP 2 673 522 B1**
(45) Veröffentlichungstag und Bekanntmachung des Hinweises auf die Patenterteilung: **17.06.2015**
(21) Anmeldenummer: 12712552.4
(22) Anmeldetag: 30.01.2012
(51) Int. Cl.: F15B 21/00, F16D 48/02, F16D 25/08

(54) **DÄMPFUNGSEINRICHTUNG**
DAMPING DEVICE
DISPOSITIF D'AMORTISSEMENT

(30) Priorität: 10.02.2011 DE 102011010874
(43) Veröffentlichungstag der Anmeldung: 18.12.2013
(73) Patentinhaber: Schaeffler Technologies AG & Co. KG, 91074 Herzogenaurach (DE)
(72) Erfinder: BERTHELEMY, Pierre-Yves, 67000 Strasbourg (FR); INEICHEN, Laurent, 67100 Strasbourg (FR)
(86) Internationale Anmeldenummer: PCT/DE2012/000067
(87) Internationale Veröffentlichungsnummer: WO 2012/107018

(56) Entgegenhaltungen:
- EP-A1- 1 801 486
- WO-A1-03/048628
- WO-A1-2011/127887
- WO-A2-2008/007036
- DE-A1-102006 017 694
- DE-A1-102009 004 706
- DE-A1-102009 049 244
- GB-A- 2 386 934
- JP-A- 8 240 201
- JP-A- 11 315 990

## Beschreibung

Die Erfindung betrifft eine Dämpfungseinrichtung zur Dämpfung von unerwünschten Druckschwankungen in einer hydraulischen Strecke, insbesondere für eine Kupplungsbetätigung.

Aus der Druckschrift DE 10 2008 003 991 A1 ist eine Lösung zur Unterdrückung von Eigenresonanzen in einer hydraulischen Strecke bekannt, bei welcher dazu ein besonders ausgestalteter Helmholtz-Resonator verwendet wird. Dieser besteht aus einem Leitungsstück, das mit einem von diesem abzweigenden Behälter verbunden ist. Die Verzweigung, die aus einem T-Stück gebildet wird, ermöglicht, den Helmholtz-Resonator mit dem Ausrücksystem zu verknüpfen. Das Ausrücksystem besteht im Wesentlichen aus einem Geber- und einem Nehmerzylinder, die mittels einer Druckleitung miteinander verbunden sind. Die Druckleitung ist ihrem Volumen entsprechend mit Fluidmasse befüllt und fungiert somit als Speicher für die kinetische Energie. Der als Druckspeicher fungierende Behälter hat die Funktion eines federnden Elements mit einer bestimmten hydraulischen Kapazität. Er speichert damit die potentielle Energie. Die Abmessungen der Druckleitung und die hydraulische Kapazität des Behälters sollen nach der erfinderischen Lösung so abgestimmt werden, dass die Eigenfrequenz des Helmholtz-Resonators der zu filternden Frequenz im Ausrücksystem entspricht.

Gemäß einer noch nicht veröffentlichten Lösung ist ebenfalls eine Dämpfungseinrichtung an mindestens einem Abzweig innerhalb einer hydraulischen Strecke zur Kupplungsbetätigung angeordnet. Der Abzweig wird aus einem Winkeistecker mit zwei vorzugsweise rechtwinklig zueinander ausgeführten Steckern gebildet. Die Verbindung der Dämpfungseinrichtung mit einem dieser Stecker wird in axialer Richtung mittels eines Befestigungselementes gesichert, wobei die Dämpfungseinrichtung durch einen die Austrittsöffnung dieses Steckers teilweise verschließenden Drosselstecker gebildet wird, der von einem mit einem Einsatz versehenen Behälter umhüllt wird.

Die Verwendung einer Dämpfungseinrichtung quer zu der Druckleitung, die sich zwischen Geberzylinder und Nehmerzylinder erstreckt und ein separates Gehäuse aufweist, ist dabei relativ aufwendig und erfordert einen großen Bauraumbedarf. Weiterhin weisen die Tilger eine relativ hohe Steifigkeit auf, wobei die Steifigkeit des Speichers eine wichtige Rolle in der Funktionserfüllung spielt. Die Breitbandigkeit ist stark abhängig von der hydraulischen Kapazität des Speichers. Je nachgiebiger der Speicher ist, desto breitbandiger wirkt der Tilger, wobei andererseits diese Kapazität möglichst klein bleiben sollte, um zu viel Pedalverluste zu vermeiden. Weiterhin wurde festgestellt, dass die störenden Schwingungen oft breitbandiger als der Funktionsbereich des Tilgers sind und dass die vorgenannt beschriebenen steifen Tilger manchmal auch zur Verstärkung von anderen Resonanzen führen. Eine Möglichkeit, dieses Problem zu lösen, kann in der Erhöhung der Steifigkeit der Dose höher als 4mm³/bar vorgesehen werden, wobei jedoch eine derartige konstruktive Maßnahme mit den aktuellen Lösungen nicht möglich ist. Eine Reduzierung der Wandstärke oder Vergrößerung der Fläche führt zu hoher Belastung im Material (insbesondere für das Schweißen).

Darüber hinaus sind alle konstruktiven Lösungen bis heute nur mit senkrechtem Speicher neben der Leitung ausgelegt. Diese Ausrichtung ist oft problematisch bei Bauraumuntersuchung, da außerdem der Speicher zur Entlüftung immer nach oben montiert sein soll.

Aus einer noch unveröffentlichten Lösung ist demgegenüber eine Dämpfungseinrichtung zur Dämpfung von unerwünschten Druckschwankungen in einer hydraulischen Strecke, insbesondere für eine Kupplungsbetätigung, wobei ein Geberzylinder und ein Nehmerzylinder mittels einer von Fluid durchströmten Druckleitung miteinander verbunden sind, bekannt, wobei ein Tilger, basierend auf dem Helmholtz-Resonator Prinzip, Verwendung findet, der Funktionselemente aufweist, die in die hydraulische Strecke integriert sind.

Die vorgenannten Tilger gewährleisten immer eine sehr effektive Wirkung bezüglich Schwingungsreduktion in dem gewählten, jedoch begrenzten, Frequenzbereich. Er wirkt immer relativ schmalbandig und kann zum Beispiel eine Resonanz löschen. Dabei bestimmt die Steifigkeit des Tilgers die Bandbreite und ist ein Kompromiss zwischen den zulässigen Pedalwegverlusten und der angestrebten Funktionalität.

Bekannte Schalldämpfer, wie sie beispielsweise in PKW-Auspuffsystemen und anderen Bereichen verwendet werden, sind dazu geeignet, Ganzschwingungen zu dämpfen und können somit Resonanzen komplett löschen. Dafür werden beispielsweise zur Verbesserung der Schalldämpfungseigenschaften poröse Materialien verwendet (siehe DE 60 2004 008 774 T2).

Die Anwendung poröser Materialien zur Schwingungsreduktion in einer hydraulischen Strecke eines Kraftfahrzeuges ist bisher nicht bekannt.

DE 10 2009 004 706 A1 offenbart eine Vorrichtung nach dem Oberbegriff des Anspruchs 1.

Die Aufgabe der Erfindung besteht darin, eine Dämpfungseinrichtung zur Dämpfung von unerwünschten Druckschwankungen in einer hydraulischen Strecke, insbesondere für eine Kupplungsbetätigung, zu entwickeln, die eine breitbandige Schwingungsdämpfung ermöglicht und Pedalwegverluste reduziert bzw. vermeidet.

Diese Aufgabe wird mit einer Dämpfungseinrichtung mit den Merkmalen des ersten Patentanspruchs gelöst. Vorteilhafte Ausgestaltungen ergeben sich aus den Unteransprüchen.

Die Dämpfungseinrichtung zur Dämpfung von unerwünschten Druckschwankungen in einer hydraulischen Strecke findet insbesondere für eine Kupplungsbetätigung Anwendung, wobei ein Geberzylinder und ein Nehmerzylinder mittels einer von Fluid durchströmten Druckleitung miteinander verbunden sind, unter Verwendung eines in der hydraulischen Strecke angeordneten Tilgers, der ein Gehäuse mit einer Durchgangsöffnung für das Fluid aufweist, wobei erfindungsgemäß mit dem Tilger ein schalldämpfendes Element kombiniert ist.

Durch die erstmalige Kombination eines schalldämpfenden Elementes mit einem Tilger, bevorzugt die Integration eines schalldämpfenden Elementes in einen Tilger, kann eine sehr gute Reduktion der Druckschwingungen im Geberzylinder erreicht werden. Ein großer Vorteil der Dämpfungseinrichtung besteht auch darin, dass eine hervorragende Schwingungsreduktion ohne erhöhte Nachgiebigkeit der Vorrichtung gewährleistet ist.

Vorzugsweise besteht das schalldämpfende Element aus porösem Material, wie es beispielsweise für Schalldämpfer in Auspuffanlagen verwendet wird. Das schalldämpfende Element ist in die Durchgangsöffnung des Tilgers integriert, wobei sich durch das poröse schalldämpfende Element ein oder mehrere Durchströmkanäle bevorzugt in Strömungsrichtung erstrecken.

Der Tilger wird vorteilhafter Weise koaxial zur Druckleitung angeordnet und das schalldämpfende Element ist insbesondere zylinderförmig ausgebildet und ebenfalls koaxial zur Druckleitung im Gehäuse des Tilgers angeordnet, wobei zumindest ein Durchströmkanal des schalldämpfenden Elementes zentrisch und koaxial zur Druckleitung durch das schalldämpfende Element führt.

Die Poren des schalldämpfenden Elements sind bevorzugt offen ausgebildet und stehen auch untereinander in Verbindung, so dass es möglich ist, dass das Fluid mit dem entsprechenden Druck nicht nur durch den/die Durchströmkanäle, sondern auch durch das poröse Material des schalldämpfenden Elementes strömt. Der Strömungswiderstand wird durch die Anzahl und den Querschnitt der Durchströmkanäle sowie durch die Porenanzahl und -größe bestimmt. Insbesondere die Strömungskanäle dienen dazu, den Widerstand des Dämpfers bei normaler Pedalbetätigung zu minimieren.

Das schalldämpfende Element besteht bevorzugt aus porösem Material, welches selbsttragend ist.

Im gegenteiligen Fall wird das schalldämpfende Element in einem Stützkörper/Käfig angeordnet, wobei der Stützkörper/Käfig den porösen Bereich des schalldämpfenden Elementes zumindest umfangsseitig bereichsweise oder komplett ummantelt.

Das schalldämpfenden Element wird zwischen zwei Anschlägen innerhalb des Gehäuses axial fixiert. An das schalldämpfende Element schließt sich eine Tilgerzuleitung in Form eines Einpressteils an. Dabei wird zuerst das schalldämpfende poröse Medium im Gehäuse positioniert und anschließend die Tilgerzuleitung montiert/eingepresst. Der Gehäusedeckel wird am Gehäuse bevorzugt durch Schweißen, zum Beispiel Rotationsschweißen, verbunden.

Das Einpressteil weist in Richtung zum Deckel einen Strömungsverteiler auf, der das Fluid von der Durchgangsöffnung des Anschlusses im Deckel radial nach außen führt.

Zwischen Einpressteil und Gehäuse ist eine Verdrehsicherung vorgesehen, vorzugsweise in Form einer Abflachung am Einpressteil, die mit einer entsprechenden Fläche des Gehäuses korrespondiert. Auch das Gehäuse besitzt an seinem dem ersten Anschluss gegenüberliegenden Ende einen zweiten Anschluss für die Druckleitung, mit welchem es lagefixiert an der Druckleitung befestigbar ist, so dass das Gehäuse so in die Druckleitung eingebunden werden kann, dass die relative Position der Zuleitung zu der Druckleitung bekannt und verstellbar ist, so dass zur Gewährleistung der Entlüftung die Zuleitung nach oben ausgerichtet ist. Das Einpressteil weist einen Stömungsverteiler auf, durch welchen Fluid an die höchste Stelle des Tilgers gelangt. Durch diese konstruktiven Maßnahmen ist eine Selbstentlüftung des Systems sichergestellt.

Die neue und erfindungsgemäße Konstruktion verwendet insbesondere die bekannte koaxiale Anordnung des Tilgers in Kombination mit einem schalldämpfenden Element. Dabei soll einerseits bei normaler Betätigung der Kupplung kein deutlicher zusätzlicher Widerstand entstehen und andererseits soll die Schwingungsenergie effektiv in Wärme umgewandelt werden. Dies wird mit der erfindungsgemäßen Lösung gewährleistet.

Die Erfindung wird nachfolgend anhand eines Ausführungsbeispiels und zugehöriger Zeichnungen näher erläutert.

Es zeigen:
- Figur 1: einen Längsschnitt durch einen Tilger/Speicher;
- Figur 2: einen Längsschnitt durch das schalldämpfende Element des Tilgers aus Figur 1;
- Figur 3: eine dreidimensionale Darstellung des Einpressteils aus Figur 1;
- Figur 4: eine Darstellung des Drucks im Geberzylinder in Abhängigkeit von der Frequenz in der hydraulischen Strecke.

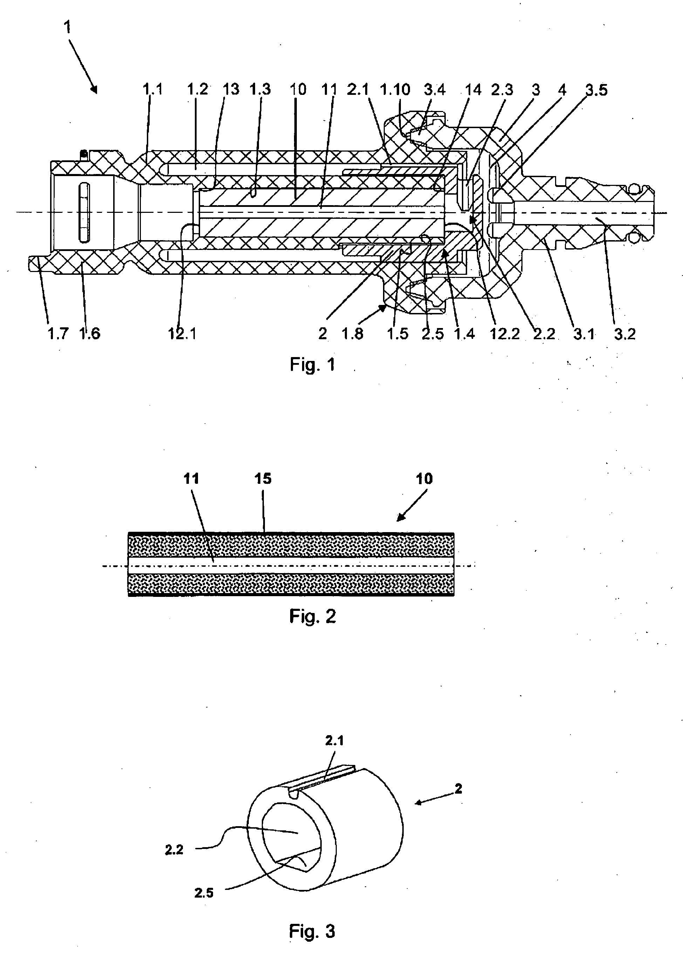

Figur 1 zeigt einen Längsschnitt eines Tilgers 1, der ein Gehäuse 1.1 aufweist. Auf die Darstellung von Dichtungen und Halteklammern wurde verzichtet.

In dem Gehäuse 1.1 sind ein Ringraum 1.2 und eine zentrische Durchgangsöffnung 1.3 ausgebildet, in der Durchgangsöffnung 1.3 ist ein schalldämpfendes Element 10 aus einem porösem Medium angeordnet, welches zylinderförmig ausgebildet ist und einen zentrischen Durchströmkanal 11 aufweist. Das schalldämpfende Element 10 liegt mit seinem ersten stirnseitigen Ende 12.1, welches in das Gehäuse 1.1 ragt, an einem radialen ersten Anschlag 13 im Gehäuse an, der durch eine radial nach innen weisende Durchmesserverringerung der Durchgangsöffnung 1.3 gebildet wird. Das zweite stirnseitige Ende 12.2 des schalldämpfenden Elements 10 schließt in etwa mit dem ersten Ende 1.4 des Gehäuses 1.1 ab, aus dessen Richtung der Ringraum 1.2 eingebracht ist. An diesem Ende 1.4 des Gehäuses 1.1 wurde ein Einpressteil 2 vorgesehen, welches in den Ringraum 1.2 eingepresst ist und mit einem radial nach innen weisenden (nicht bezeichneten) Absatz an einer Stirnfläche am ersten Ende 1.4 des Gehäuses 1.1 und am zweiten stirnseitigen Ende 12.2 des schalldämpfenden Elementes 10 anliegt und für dieses einen zweiten Anschlag 14 bildet. Am ersten Ende 1.4 des Gehäuses 1.1 ist ein Deckel 3 befestigt, der einen Anschluss 3.1 mit einer Durchgangsöffnung 3.2 zur Anbindung an eine nicht dargestellte Druckleitung aufweist.

Das Einpressteil 2 ist an seinem Außenumfang mit einer Nut versehen, die eine Zuleitung 2.1 zum Ringraum 1.2 bildet. Radial außen ist die Zuleitung 2.1 durch das Gehäuse 1.1 ver-, schlossen. Weiterhin weist das Einpressteil 2 einen Strömungsverteiler 2.2 auf, der in Form einer radial nach innen weisenden Wand ausgebildet ist, die eine zentrische Öffnung 2.3 besitzt, welche einen Durchgang von der Durchgangsöffnung 3.2 des Deckels 3 zur zentrischen Durchgangsöffnung 1.3 des Gehäuses 1.1 bildet. Zwischen der Innenwand des Deckels 3 und dem darauf zuweisenden stirnseitigen Ende des Einpressteils 2 wird ein mit Fluid durchströmbarer Raum 4 gebildet.

Durch den Strömungsverteiler 2.2 wird eine kleine Menge vom Fluid immer an die höchste Stelle des Tilgers gespült, wodurch ermöglicht wird, dass der Tilger 1 mit einer beliebigen Steigung im Fahrzeug eingebaut werden kann.

Zur Verdrehsicherung weist das Einpressteil 2 an seinem dem Strömungsverteiler 2.2 gegenüber liegenden Ende eine Abflachung 2.5 auf, die mit einer ersten Abflachung 1.5 am Gehäuse 1.1 korrespondiert. An seinem zweiten Ende 1.6 wird der Tilger 1 ebenfalls an die Druckleitung (nicht dargestellt) angeschlossen. Um zu gewährleisten, dass die Zuleitung 2.1 des Einpressteils 2 immer oben liegt (für Entlüftung) sind auch an dem zweiten Ende 1.6 zweite Abflachungen 1.7 vorgesehen, die zur Lagefixierung dienen. Damit ist die relative Position der Zuleitung 2.1 zu der Hauptleitung bestimmbar und ausrichtbar. Zur Entlüftung muss die Zuleitung 2.1 des Einpressteils 2 immer nach oben ausgerichtet werden.

Der Deckel 3 weist innen mehrere Stifte 3.5 auf, die sich in axialer Richtung erstrecken und ist kegel- bzw. halbkugelförmig gestaltet, so dass dieser Raum in Verbindung mit dem Strömungsverteiler 2.2 des Einpressteils 2 zur Strömungsverteilung dient.

Die koaxiale Anordnung des Tilgers 1 in der Druckleitung ermöglicht eine schlanke Bauform und eine einfache Einbindung in die Druckleitung.

Der Deckel 3 wird mit dem Gehäuse 1.1 bevorzugt durch Reibschweißen verbunden. Das Reibschweißen erfolgt durch angepasste Geometrie des Gehäuses 1.1 und des Deckels 3. Zur Zentrierung weist der Deckel 3 einen stirnseitigen ringförmigen Vorsprung 3.4 auf, der in eine stirnseitige Ringnut 1.10 des Gehäuses 1.1 eingreift.

Der Längsschnitt durch ein zylinderförmiges schalldämpfendes Element 10 mit einem umfangsseitigen Stützkörper 15 und einer zentrischen Durchströmöffnung 11 ist in Figur 2 dargestellt. Innerhalb des Stützkörpers 15 befindet sich das poröse Medium des schalldämpfenden Elementes 10. Der Stützkörper 15 bildet eine schallharte und starre Wand und gewährleistet, dass ein sehr poröses Medium, welches keine eigene Stützkraft aufweist, überhaupt in das Gehäuse fügbar ist. Es ist auch möglich, zusätzlich die Durchströmöffnung bzw. das erste stirnseitige Ende 12.1 und das zweite stirnseitige Ende 12.2 zusätzlich mit einem Stützkörper zu versehen.

Das dreidimensionale hohlzylinderförmige Einpressteil 2 ist in Figur 3 dargestellt. Daraus sind die nutartige Zuleitung 2.1, die Öffnung 2.3 und die zur Lagefixierung dienende Abflachung 2.5 erkennbar. Durch die Zuleitung 2.1 in Form einer Nut kann ein kleiner Außendurchmesser realisiert werden. Im montierten Zustand wirkt die durch das Gehäuse 1.1 geschlossene Nut dann wie eine Bohrung, da für die Funktion nur der Querschnitt von Bedeutung ist.

Der Speicher/Tilger 1 weist den Vorteil auf, dass durch die sehr einfache Maßnahme in Form der Integration eines schalldämpfenden Elementes 10 in Form eines zylinderförmigen porösen Bauteils die Dämpfungseigenschaften des Tilgers 1 im Vergleich zu herkömmlichen Lösungen erheblich verbessert wird, was aus Figur 5 hervorgeht.

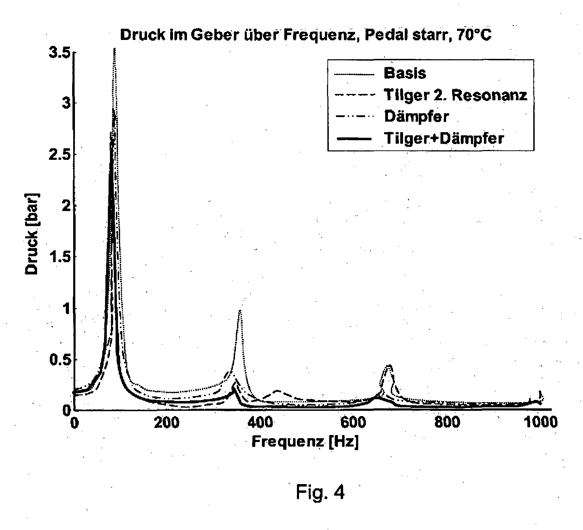

Figur 4 zeigt eine Gegenüberstellung des Drucks im Geberzylinder in Abhängigkeit von der Frequenz in der hydraulischen Strecke. Die dünn gepunktete Linie stellt den Druck ohne Tilger dar, die gestrichelte Linie die Dämpfung mit einem Tilger. Die Strich-Punkt-Linie die Dämpfung mit einem Dämpfer und die durchgehende Linie die Dämpfung mit der erfindungsgemäßen Kombination Tilger und Dämpfer. Es ist ersichtlich, dass mit der letztgenannten erfindungsgemäßen Lösung die besten schwingungsdämpfenden Ergebnisse erzielt werden.

Zur Dämpfung von in eine hydraulische Strecke eingetragenen Schwingungen wird die Dämpfungseinrichtung in die hydraulische Strecke eingebunden.

Diese neue koaxiale Lösung besteht aus nur vier Teilen, nämlich einem Gehäuse 1 (Speicher), in welchem das schwingungsdämpfende Element 10 und das Einpressteil 2 angeordnet sind sowie dem Deckel 3 und ist daher einfach und kostengünstig herstellbar

Neben dem dargestellten Ausführungsbeispiel sind auch andere konstruktive Varianten für die Gestaltung des Tilgers möglich. Beispielsweise kann das schwingungsdämpfende Element 10 auch nicht in den Tilger integriert werden, sondern davor und/oder danach angeordnet sein.

### Bezugszeichenliste

- a.: Tilger
- 1.1: Gehäuse
- 1.2: Ringraum
- 1.3: Durchgangsöffnung
- 1.4: erstes Ende
- 1.5: erste Abflachung
- 1.6: zweites Ende
- 1.7: zweite Abflachung
- 1.8: Durchmessererweiterung
- 1.9: erste Anschläge
- 1.10: Ringnut
- b.: Einpressteil
- 2.1: Zuleitung
- 2.2: Strömungsverteiler
- 2.3: Öffnung
- 2.5: Abflachung
- 3: Deckel
- 3.1: Anschluss
- 3.2: Durchgangsöffnung
- 3.3: zweite Anschläge
- 3.4: Vorsprung
- 3.5: Stifte
- 4: Raum
- 10: schalldämpfendes Element
- 11: Durchströmöffnung
- 12.1: erstes stirnseitiges Ende
- 12.2: zweites stirnseitiges Ende
- 13: erster Anschlag
- 14: zweiter Anschlag
- 15: Stützkörper

## Patentansprüche

1. Vorrichtung zur Kupplungsbetätigung mit einem Geberzylinder und einem Nehmerzylinder, die mittels einer von Fluid durchströmten Druckleitung miteinander verbunden sind, mit einer Dämpfungseinrichtung zur Dämpfung von unerwünschten Druckschwankungen in einer hydraulischen Strecke unter Verwendung eines in der hydraulischen Strecke angeordneten und zur Druckleitung koaxialen Tilgers (1) zur Schwingungsreduktion in der Druckleitung, wobei der Tilger (1) ein Gehäuse (1.1) mit einer Durchgangsöffnung (1.3) für das Fluid sowie ein Einpressteil (2) aufweist, und mit dem Tilger (1) ein schalldämpfendes Element (10) zur Löschung von Resonanzen kombiniert ist, wobei das zylinderförmig ausgebildete schalldämpfende Element (10) porös ausgebildet und in die Durchgangsöffnung (1.3) des Tilgers (1) integriert ist sowie koaxial zur Druckleitung angeordnet ist und zumindest ein Durchströmkanal (11) des schalldämpfenden Elements (10) koaxial zur Druckleitung ausgebildet ist, und wobei das schalldämpfende Element (10) in einem Stützkörper (15) oder Käfig angeordnet ist, wobei der Stützkörper (15) oder Käfig den porösen Bereich des schalldämpfenden Elementes (10) zumindest teilweise umfangsseitig ummantelt und wobei das schalldämpfende Element (10) zwischen zwei Anschlägen (13, 14) innerhalb des Gehäuses (1.2) angeordnet ist und sich an das schalldämpfende Element (10) das Einpressteil (2) mit einem Strömungsverteiler (2.2) für die Zuführung des Fluids anschließt.

2. Dämpfungseinrichtung nach Anspruch 1, **dadurch gekennzeichnet, dass** das schalldämpfende Element (10) mehrere Durchströmkanäle (11) aufweist, die sich in Strömungsrichtung erstrecken.

3. Dämpfungseinrichtung nach einem der Ansprüche 1 bis 2, **dadurch gekennzeichnet, dass** die Poren des schalldämpfenden Elements (10) offen sind.

4. Dämpfungseinrichtung nach einem der Ansprüche 1 bis 3, **dadurch gekennzeichnet, dass** das Einpressteil (2) an seinem Außenumfang mit einer Nut versehen ist, die eine Zuleitung (2.1) für das Fluid zu einem Ringraum (1.2) des Tilgergehäuses (1.1) bildet.

## Claims

1. Apparatus for clutch actuation, with a master cylinder and a slave cylinder which are connected to one another by means of a pressure line through which fluid flows, with a damping device for the damping of undesirable pressure fluctuations in a hydraulic section, using an absorber (1), arranged in the hydraulic section and coaxial with the pressure line, for vibration reduction in the pressure line, the absorber (1) having a housing (1.1) with a through-orifice (1.3) for the fluid and also a press-in part (2), and a sound-damping element (10) for the extinguishing of resonances being combined with the absorber (1), the cylindrically formed sound-damping element (10) being designed to be porous and being integrated into the through-orifice (1.3) of the absorber (1) and also being arranged coaxially to the pressure line, and at least one throughflow duct (11) of the sound-damping element (10) being formed coaxially to the pressure line, and the sound-damping element (10) being arranged in a supporting body (15) or cage, the supporting body (15) or cage encasing the porous region of the sound-damping element (10) at least partially circumferentially, and the sound-damping element (10) being arranged between two stops (13, 14) inside the housing (1.2), and the press-in part (2) adjoining the sound-damping element (10) and having a flow distributor (2.2) for supplying the fluid.

2. Damping device according to Claim 1, **characterized in that** the sound-damping element (10) has a plurality of throughflow ducts (11) which extend in the direction of flow.

3. Damping device according to either one of Claims 1 and 2, **characterized in that** the pores of the sound-damping element (10) are open.

4. Damping device according to one of Claims 1 to 3, **characterized in that** the press-in part (2) is provided on its outer circumference with a groove which forms a feed line (2.1) for the fluid to an annular space (1.2) of the absorber housing (1.1).

## Revendications

1. Dispositif d'actionnement d'embrayage comprenant un maître-cylindre et un cylindre récepteur qui sont reliés l'un à l'autre au moyen d'une conduite sous pression parcourue par du fluide, comprenant un dispositif d'amortissement pour l'amortissement de fluctuations de pression indésirables dans une section hydraulique en utilisant un amortisseur (1) disposé dans la section hydraulique et coaxial à la conduite sous pression pour la réduction des vibrations dans la conduite sous pression, l'amortisseur (1) comprenant un boîtier (1.1) pourvu d'une ouverture de passage (1.3) pour le fluide ainsi qu'une pièce à enfoncer (2), et un élément amortissant les bruits (10) étant combiné avec l'amortisseur (1) pour la suppression de résonances, l'élément amortissant les bruits (10) réalisé sous forme cylindrique étant réalisé de manière poreuse et étant intégré dans l'ouverture de passage (1.3) de l'amortisseur (1) ainsi que disposé de manière coaxiale à la conduite sous pression et au moins un canal d'écoulement (11) de l'élément amortissant les bruits (10) étant réalisé de manière coaxiale à la conduite sous pression, et l'élément amortissant les bruits (10) étant disposé dans un corps de support (15) ou une cage, le corps de support (15) ou la cage enveloppant au moins partiellement du côté périphérique la région poreuse de l'élément amortissant les bruits (10) et l'élément amortissant les bruits (10) étant disposé entre deux butées (13, 14) à l'intérieur du boîtier (1.2) et la pièce à enfoncer (2) pourvue d'un distributeur d'écoulement (2.2) pour l'acheminement du fluide se raccordant à l'élément amortissant les bruits (10).

2. Dispositif d'amortissement selon la revendication 1, **caractérisé en ce que** l'élément amortissant les bruits (10) comprend plusieurs canaux d'écoulement (11) qui s'étendent dans la direction de l'écoulement.

3. Dispositif d'amortissement selon l'une quelconque des revendications 1 et 2, **caractérisé en ce que** les pores de l'élément amortissant les bruits (10) sont ouverts.

4. Dispositif d'amortissement selon l'une quelconque des revendications 1 à 3, **caractérisé en ce que** la pièce à enfoncer (2) est pourvue d'une rainure sur sa périphérie extérieure, laquelle rainure forme une conduite d'amenée (2.1) pour le fluide jusqu'à un espace annulaire (1.2) du boîtier d'amortisseur (1.1).
